# EUROPEAN PATENT APPLICATION

(11) **EP 4 501 128 A1**
(43) Date of publication of application: **05.02.2025**
(21) Application number: 23779359.1
(22) Date of filing: 08.03.2023
(51) Int. Cl.: A23J 3/00, A23J 3/14, A23J 3/16, A23L 15/00, A23L 29/244, A23L 29/262, A23L 29/269

(54) **EGG SUBSTITUTE AND METHOD FOR PRODUCING EGG SUBSTITUTE**

(30) Priority: 31.03.2022 JP 2022060181
(71) Applicant: Fuji Oil Holdings Inc., Izumisano-shi, Osaka 598-8540 (JP)
(72) Inventor: JACUTPRAKART, Sombol, Izumisano-shi, Osaka 598-8540 (JP); SHIBATA, Munehisa, Izumisano-shi, Osaka 598-8540 (JP); YOSHIKAWA, Shinichi, Izumisano-shi, Osaka 598-8540 (JP); KANO, Hiroshi, Izumisano-shi, Osaka 598-8540 (JP); INOUE, Ryota, Izumisano-shi, Osaka 598-8540 (JP); UEYAMA, Tomoki, Izumisano-shi, Osaka 598-8540 (JP)
(74) Representative: Becker, Eberhard
(86) International application number: PCT/JP2023/008901
(87) International publication number: WO 2023/189332

(57) **Abstract**

The purpose of the present invention is to provide: a food product substitute for a baked egg food product, the food product substitute having excellent texture and flavor; and an egg substitute that enables the production of this food product substitute. The inventors discovered that a baked egg food product having excellent texture and flavor can be produced when water, a protein material, an oil/fat, and a specific gelling agent are mixed and used as an egg substitute.

## Description

### Technical Field

The present invention relates to an egg substitute and a method for producing an egg substitute.

### Background Art

Eggs are widely used in various foods such as seasonings, prepared foods, and confectioneries because they have excellent characteristics in functions, nutritional values, and the like. In recent years, however, consumers' awareness of health has increased, and therefore the consumption of eggs having a high cholesterol content tends to be avoided. Under such circumstances, various studies have been made on egg substitute foods.

For example, there are a technique related to an egg substitute composition containing from 25*%* to 80*%* (w/w) of a protein, from 5*%* to 50*%* (w/w) of a Fabaceae powder, and from 5*%* to 60*%* (w/w) of a polysaccharide (Patent Document 1), and a technique related to a liquid egg substitute composition containing an almond-extracted protein and curdlan, and having a content of the almond-extracted protein of 1 mass*%* or more and 15 mass*%* or less (Patent Document 2).

### Citation List

### Patent Documents

Patent Document 1: JP 2021-524738 T
Patent Document 2: JP 6963707 B

### Summary of Invention

### Technical Problem

In the known techniques, the compositions, when used as an egg substitute, are inadequate in texture and the like as an egg processed food, and there is room for improvement.

An object of the present invention is to provide a substitute food for a baked egg food, which is excellent in flavor and texture, and to provide an egg substitute that enables production of the substitute food.

### Solution to Problem

As a result of intensive studies to solve the above-mentioned problem, the present inventors have found that use of a blend of water, a protein material, an oil and/or fat, and specific gelling agents as an egg substitute enables production of a baked egg food-like food excelling in flavor and texture, and have completed the present invention.

More specifically, the present invention is as follows:
(1) An egg substitute containing:
   water;
   a protein material;
   an oil and/or fat; and
   gelling agents (A) and (B) described below,
   the egg substitute contains, relative to 100 mass*%* of a total amount of the protein material, the oil and/or fat, the gelling agents, and water in the egg substitute, from 0.01 to 10 mass*%* of the protein material, from 5 to 30 mass*%* of the oil and/or fat, and from 1 to 10 mass*%* of a total amount of the gelling agents (A) and (B):
      (A) curdlan; and
      (B) one or more selected from methylcellulose, gellan gum, and konjac flour;
(2) The egg substitute according to (1), further containing dietary fiber,
   the egg substitute contains, relative to 100 mass*%* of a total amount of water, the protein material, the oil and/or fat, the gelling agents, and the dietary fiber in the egg substitute, from 0.01 to 5 mass*%* of the protein material, from 5 to 30 mass*%* of the oil and/or fat, from 1 to 10 mass*%* of a total amount of the gelling agents (A) and (B), and from 0.1 to 10 mass*%* of the dietary fiber;
(3) The egg substitute according to (1) or (2), wherein the protein material is a vegetable protein material;
(4) A baked egg product-like food, which is a baked product of the egg substitute described in (1);
(5) A baked egg product-like food, which is a baked product of the egg substitute described in (2);
(6) A baked egg product-like food, which is a baked product of the egg substitute described in (3);
(7) A dried product of the egg substitute described in (1);
(8) A dried product of the egg substitute described in (2);
(9) A dried product of the egg substitute described in (3);
(10) A method for producing an egg substitute, the method including steps (1) and (2) described below:
   (1) mixing and emulsifying water, a protein material, and an oil and/or fat to prepare an oil-in-water emulsion having an oil and/or fat content of 40 mass*%* or more; and
   (2) adding gelling agents (A) and (B) described below to the oil-in-water emulsion obtained in step (1) and mixing the gelling agents (A) and (B) with the oil-in-water emulsion to prepare a dough:
      (A) curdlan; and
      (B) one or more selected from methylcellulose, gellan gum, and konjac flour;
(11) The method for producing an egg substitute according to (10), wherein in step (1), water, the protein material, and the oil and/or fat are mixed and emulsified to prepare the oil-in-water emulsion having an oil and/or fat content of 50 mass*%* or more;
(12) A method for producing a dried product of an egg substitute, the method including steps (1) to (3) described below:
   (1) mixing and emulsifying water, a protein material, and an oil and/or fat to prepare an oil-in-water emulsion having an oil and/or fat content of 40 mass*%* or more;
   (2) adding gelling agents (A) and (B) described below to the oil-in-water emulsion obtained in step (1) and mixing the gelling agents (A) and (B) with the oil-in-water emulsion to prepare a dough:
      (A) curdlan; and
      (B) one or more selected from methylcellulose, gellan gum, and konjac flour; and
   (3) drying the dough obtained in step (2);
(13) The method for producing a dried product of an egg substitute according to (12), wherein in step (1), water, the protein material, and the oil and/or fat are mixed and emulsified to prepare the oil-in-water emulsion having an oil and/or fat content of 50 mass% or more;
(14) A method for producing a baked egg product-like food, the method including baking the egg substitute obtained by the production method described in (10);
(15) A method for producing a baked egg product-like food, the method including baking the egg substitute obtained by the production method described in (11);
(16) A method for producing a dried product of a baked egg product-like food, the method including drying the baked egg product-like food obtained by the production method described in (14); and
(17) A method for producing a dried product of a baked egg product-like food, the method including drying the baked egg product-like food obtained by the production method described in (15).

### Advantageous Effects of Invention

Use of the egg substitute of the present invention provides a baked egg product-like food excelling in flavor and texture.

### Description of Embodiments

### Egg Substitute

An egg substitute of the present invention is an egg substitute containing water, a protein material, an oil and/or fat, and gelling agents (A) and (B) described below, and the egg substitute is characterized in that it contains, relative to 100 mass*%* of a total amount of the protein material, the oil and/or fat, the gelling agents (A) and (B), and water in the egg substitute, from 0.01 to 10 mass*%* of the protein material, from 5 to 30 mass*%* of the oil and/or fat, and from 1 to 10 mass*%* of a total amount of the gelling agents (A) and (B):
(A) curdlan; and
(B) one or more selected from methylcellulose, gellan gum, and konjac flour.

The egg substitute of the present invention may be further subjected to a heating treatment or a drying treatment.

### Oil and/or Fat

Examples of the oil and/or fat used in the present invention include vegetable oils and/or fats such as soybean oil, rapeseed oil, sunflower oil, high-oleic sunflower oil, rice oil, cotton oil, corn oil, safflower oil, peanut oil, palm oil, palm kernel oil, coconut oil, olive oil, Kapok oil, moringa oil, and sesame oil; MCT; and fractionated oils, transesterified oils, and hardened oils thereof. These oils and/or fats can be used alone, or two or more kinds thereof can be used in combination.

In addition, flavored oils and/or fats obtained by flavoring these vegetable oils and/or fats can also be used. Here, examples of the flavored oil and/or fat include oils and/or fats flavored by the addition of extracts, flavorings, spices, vegetables, seasonings, milk raw materials, other plant-derived raw materials such as rice bran, and the like, or by heating or the like after the addition of these. Examples of the flavored oil and/or fat also include those obtained by extracting a flavor from a seasoning liquid containing amino acids, sugars, and lipids using a vegetable oil and/or fat. The flavored oil and/or fat is preferably an oil and/or fat whose flavor is extracted from a seasoning liquid containing at least a yeast extract using a vegetable oil and/or fat, that is, the flavored oil and/or fat contains at least a yeast extract. Specifically, the flavored oil and/or fat includes a "flavor-added oil and/or fat" that is obtained by separately adding a flavor to a vegetable oil and/or fat as a base.

The flavored oils and/or fats can be used alone or in combination with the vegetable oil and/or fat.

The oil and/or fat content in the egg substitute is, relative to 100 mass*%* of a total amount of the protein material, the oil and/or fat, the gelling agents (A) and (B), and water, from 5 to 30 mass*%*, preferably from 6 to 28 mass*%*, more preferably from 7 to 25 mass*%*, and may be still more preferably from 8 to 23 mass*%*, from 8 to 20 mass*%*, from 8 to 18 mass*%*, or from 8 to 16 mass*%*.

### Gelling Agents

The gelling agents in the present invention include the following (A) and (B). Specifically, the gelling agents include (A) curdlan, and (B) one or more selected from methylcellulose, gellan gum, and konjac flour.

The curdlan of the present invention is a thermocoagulable polysaccharide mainly containing β-1,3-glucosidic bonds. Examples of the polysaccharide include those produced by microorganisms belonging to the genus Alcaligenes or the genus Agrobacterium. The curdlan of the present invention also encompasses a curdlan preparation. Examples of commercially available curdlan include curdlan NS and curdlan preparation CD-ES manufactured by Mitsubishi Corporation Life Sciences Limited. The curdlan can be used alone, or two or more kinds thereof can be used in combination.

The methylcellulose of the present invention is obtained by substituting a hydroxyl group in a cellulose skeleton with a methoxyl group found in pectin or the like. Examples of commercially available methylcellulose include the METOLOSE (registered trademark) series manufactured by Shin-Etsu Chemical Co., Ltd., such as METOLOSE MCE-15, METOLOSE MCE-25, METOLOSE MCE-100, METOLOSE MCE-400, METOLOSE MCE-1500, and METOLOSE MCE-4000. The methylcellulose can be used alone, or two or more kinds thereof can be used in combination.

The gellan gum of the present invention is a fermented polysaccharide produced by Sphingomonas elodea, and encompasses native gellan gum and deacylated gellan gum. Examples of the native gellan gum include "KELCOGEL (registered trademark) LT-100" and "KELCOGEL (registered trademark) HM" manufactured by DSP Gokyo Food & Chemical Co., Ltd. Examples of the deacylated gellan gum include "KELCOGEL (registered trademark)" manufactured by DSP Gokyo Food & Chemical Co., Ltd.

The konjac flour of the present invention may be either of one that gels under alkaline conditions or one that gels under neutral conditions, but it is preferable to use one that gels under neutral conditions. Examples of the konjac flour that gels under neutral conditions include "Ultraman Nan" manufactured by Ina Food Industry Co., Ltd.

Other gelling agents such as gelatin, agar, carrageenan, xanthan gum, locust bean gum, guar gum, alginic acid, psyllium seed gum, tamarind gum, LM-pectin, HM-pectin, and tamarind seed polysaccharide may be blended as long as the effect of the present invention is not affected.

The content of the gelling agents (A) and (B) in the egg substitute is, relative to 100 mass*%* of a total amount of water, the protein material, the oil and/or fat, and the gelling agents (A) and (B), from 1 to 10 mass*%*, preferably from 2 to 9 mass*%*, more preferably from 2.5 to 9.5 mass*%*, and still more preferably from 2.5 to 9 mass*%* of a total amount of the gelling agents (A) and (B).

### Protein Material

The protein material of the present invention may be a vegetable protein material or an animal protein material, and the vegetable protein material and the animal protein material may be used in combination. The protein material is preferably a vegetable protein material.

The concept of the protein material of the present invention is a food material that contains a vegetable protein or an animal protein as a main component and that is used as a raw material of various processed foods and beverages. Examples of the vegetable protein material include legumes such as soybean, pea, mung bean, lupin bean, chickpea, kidney bean, lentil bean, and cowpea; seeds such as sesame, canola seed, coconut seed, and almond seed; grains such as corn, buckwheat, wheat and the like, and rice; vegetables; and fruits. In a more specific embodiment, the vegetable protein material is prepared from legume protein. In a still more specific embodiment, the vegetable protein material is prepared from soybean protein, pea protein, mung bean protein, or broad bean protein. In an even more specific embodiment, the vegetable protein material is prepared from soybean protein or pea protein. For example, a protein material derived from soybean is prepared by further concentrating and processing a protein from a soybean raw material such as defatted soybean or whole soybean, and in general, examples thereof conceptually include soybean protein isolates, soybean protein concentrates, soybean milk powder, and various processed products thereof.

Examples of the animal protein material include milk proteins such as casein, sodium caseinate, and whey protein, and egg white.

In one embodiment, the protein material may be free of egg white as an animal protein material. In another embodiment, the protein material may be free of an animal protein material.

The content of the protein material in the egg substitute is, relative to 100 mass*%* of a total amount of water, the protein material, the oil and/or fat, and the gelling agents (A) and (B), from 0.01 to 10 mass*%*, preferably from 0.05 to 5 mass*%*, more preferably from 0.1 to 3.5 mass*%*, and may be still more preferably from 0.1 to 3 mass*%*, from 0.2 to 2.5 mass*%*, from 0.2 to 2 mass*%*, or from 0.2 to 1.5 mass*%*.

### Vegetable Protein Material A

In the present invention, a vegetable protein material A having properties satisfying the following a) to c) can be used as one aspect of the used vegetable protein material.

### a) Protein Purity

The vegetable protein material A has a protein content in the solid content of 70 mass*%* or more, for example, 80 mass*%* or more, 85 mass*%* or more, or 90 mass*%* or more. As a raw material of the vegetable protein material having a protein content included in the above-mentioned range, a protein isolate is preferable, and examples thereof include a soybean protein isolate and a pea protein isolate.

### Measurement of Protein Purity

The protein purity is measured by a Kjeldahl method. Specifically, the mass of nitrogen measured by the Kjeldahl method relative to the mass of a protein material dried at 105°C for 12 hours is represented by "mass%" as the protein content in the dried product. The nitrogen conversion coefficient is 6.25. Basically, the protein purity is calculated by rounding off to the first decimal place.

### b) NSI of Protein

The vegetable protein material A has a nitrogen solubility index (NSI), which is used as an index of protein solubility, of 80 or more. More preferably, a vegetable protein material having an NSI of 85 or more, 90 or more, 95 or more, or 97 or more can be used. For example, as a vegetable protein material having a high NSI, it is preferable to use a vegetable protein material that has not been subjected to a treatment for insolubilizing a protein, such as an enzymatic decomposition treatment or a mineral addition treatment, or a vegetable protein material that has been subjected to such a treatment only to a small extent.

Note that the NSI is expressed as the percentage (mass*%*) of water-soluble nitrogen in the total nitrogen amount according to the method described later. In the present invention, the NSI is a value as measured in accordance with the method described later.

### NSI Measurement Method

To 3 g of a sample, 60 ml of water is added, followed by stirring with a propeller at 37°C for 1 hour and centrifugation at 1400 × g for 10 minutes, and a supernatant (I) is collected. Next, 100 ml of water is added to the remaining precipitate again, the resulting mixture is stirred with a propeller again at 37°C for 1 hour and then centrifuged, and a supernatant (II) is collected. The supernatants (I) and (II) are combined, and water is added to the mixed liquid to make the volume 250 ml. The mixed liquid is filtered with filter paper (No. 5), and then the nitrogen content (water-soluble nitrogen) in the filtrate is measured by the Kjeldahl method. At the same time, the total nitrogen amount in the sample is measured by the Kjeldahl method, and the percentage of the water-soluble nitrogen in the total nitrogen amount is expressed in mass*%* and is defined as the NSI. Basically, the NSI is calculated by rounding off to the first decimal place.

### c) Molecular Weight Distribution

In the measurement of the molecular weight distribution of the vegetable protein material A by gel filtration chromatography, the area percentage for a molecular weight of 2000 or more and less than 20000 is 30*%* or more, and the area percentage for a molecular weight of 20000 or more is 70*%* or less. In a specific embodiment, the area percentage for a molecular weight of 2000 or more and less than 20000 is 35*%* or more, and the area percentage for a molecular weight of 20000 or more is 65*%* or less.

In addition, in a certain embodiment, in the measurement of the molecular weight distribution of the vegetable protein material A by gel filtration chromatography, the area percentage for a molecular weight of 2000 or more and less than 10000 is from 10 to 40*%*, preferably from 15 to 35*%*, and more preferably from 20 to 30*%*. The area percentage for a molecular weight of 10000 or more is from 50 to 80*%*, preferably from 55 to 75*%*, and more preferably from 60 to 75*%*.

In another certain embodiment, in the measurement of the molecular weight distribution of the vegetable protein material A by gel filtration chromatography, the area percentage for a molecular weight of 2000 or more and less than 20000 is from 45 to 90*%*, preferably from 47 to 85*%*, and more preferably from 50 to 75*%*.

### Molecular Weight Distribution

A sample solution is prepared by adding an eluent to a protein material, adjusting the concentration of the protein material to 0.1 mass%, and then filtering the solution with a 0.2 µm filter. A gel filtration system is assembled by connecting two kinds of columns in series, a known protein or the like serving as a molecular weight marker and given in paragraph 0020 is first charged, and a calibration curve is determined from the relation between the molecular weight and the retention time. Next, the sample solution is charged, and the content rate (*%*) of each molecular weight fraction is determined by the rate of the area of a specific molecular weight range (time range) in the area of the total absorbance chart (1st column: "TSK gel G3000SWXI," (Sigma-Aldrich), 2nd column: "TSK gel G2000SWXI," (Sigma-Aldrich), eluent: 1*%* SDS + 1.17*%* NaCl + 50 mM phosphate buffer (pH 7.0), 23°C, flow rate: 0.4 ml/min, detection: UV 220 nm). Basically, the molecular weight distribution is calculated by rounding off to the first decimal place.

### Molecular Weight Marker

| Marker | Molecular weight |
|---|---|
| Thyroglobulin | 335000 |
| γ-globulin | 150000 |
| Albumin | 67000 |
| Peroxidase | 43000 |
| Myoglobin | 18000 |
| Cytochrome C | 12384 |
| Insulin | 5734 |
| Glutathione | 307 |
| p-amino acid benzoic acid | 137 |

### Molecular Weight Distribution Adjustment Treatment or Decomposition/Denaturation and Molecular Weight Distribution Adjustment Treatment

The vegetable protein material used in the oil and/or fat emulsion composition of the present aspect can be obtained by combining decomposition and/or denaturation of a protein with adjustment of the molecular weight distribution. Examples of the treatment for decomposing and/or denaturing a protein include an enzyme treatment, a pH adjustment treatment (for example, an acid treatment or an alkali treatment), a denaturant treatment, a heating treatment, a cooling treatment, a high-pressure treatment, an organic solvent treatment, a mineral addition treatment, a supercritical treatment, an ultrasonic treatment, an electrolysis treatment, and combinations thereof. Examples of the treatment for adjusting molecular weight distribution include filtration, gel filtration chromatography, centrifugation, electrophoresis, dialysis, and combinations thereof. The order and the number of times of the treatment for decomposing and/or denaturing a protein and the treatment for adjusting molecular weight distribution are not particularly limited. The treatment for decomposing and/or denaturing a protein may be performed before the treatment for adjusting molecular weight distribution, the treatment for adjusting molecular weight distribution may be performed before the treatment for decomposing and/or denaturing a protein, or both the treatments may be performed at the same time. In addition, for example, it is also possible to perform the treatment for decomposing and/or denaturing a protein between two or more times of the treatment for adjusting molecular weight distribution, to perform the treatment for adjusting molecular weight distribution between two or more times of the treatment for decomposing and/or denaturing a protein, or to perform both the treatments a plurality of times in an arbitrary order. Note that in a case where desired molecular weight distribution is obtained by the treatment for decomposing and/or denaturing a protein, the treatment for adjusting molecular weight distribution need not be performed. When these treatments are combined and performed a plurality of times, all the treatments may be performed continuously from the stage of raw materials or may be performed at time intervals. For example, a commercially available product that has undergone a certain treatment may be used as a raw material to be subjected to another treatment. In the present description, for the sake of convenience, the treatment for decomposing and/or denaturing a protein is referred to as a "decomposition/denaturation treatment", and the treatment accompanied by adjustment of the molecular weight distribution is referred to as a "decomposition/denaturation and molecular weight distribution adjustment treatment". Note that as long as the above-mentioned properties are satisfied, a specific vegetable protein material may be obtained by mixing a vegetable protein material that has undergone the decomposition/denaturation treatment or decomposition/denaturation and molecular weight distribution adjustment treatment with a protein that has not undergone the decomposition/denaturation treatment or decomposition/denaturation and molecular weight distribution adjustment treatment. In this case, the ratio between both the proteins (protein material that has undergone the treatment: protein that has not undergone the treatment) can be appropriately adjusted within a range in which the above-mentioned properties are satisfied, and examples thereof include ratios of from 1:99 to 99:1, for example, from 50:50 to 95:5 and from 75:25 to 90:10, in terms of mass ratio. In one embodiment, the vegetable protein material is composed of a vegetable protein material that has undergone the molecular weight distribution adjustment treatment or decomposition/denaturation and molecular weight distribution adjustment treatment.

The conditions of the treatment for decomposing and/or denaturing a protein, such as the type and concentration of the enzyme, acid, alkali, organic solvent, mineral, and the like, the temperature, pressure, output intensity, electric current, and time can be appropriately determined by those skilled in the art. In the case where an enzyme is used, examples of the used enzyme include proteases that are classified into "metal proteases", "acidic proteases", "thiol proteases", and "serine proteases". The reaction can be performed at a reaction temperature of from 20 to 80°C, and preferably from 40 to 60°C. In the case of the pH adjustment treatment, the treatment may be performed at a pH in a range having any values as an upper limit and a lower limit, such as pH 2, 2.5, 3, 3.5, 4, 4.5, 5, 5.5, 6, 6.5, 7, 7.5, 8, 8.5, 9, 9.5, 10, 10.5, 11, 11.5, and 12. In the case of the acid treatment, the method may be a method of adding an acid or a method of performing a fermentation treatment, such as lactic acid fermentation. Examples of the added acid include inorganic acids such as hydrochloric acid and phosphoric acid; and organic acids such as acetic acid, lactic acid, citric acid, gluconic acid, phytic acid, sorbic acid, adipic acid, succinic acid, tartaric acid, fumaric acid, malic acid, and ascorbic acid. Alternatively, an acid may be added using a food or drink containing an acid, such as fruit juice of lemon or the like, concentrated fruit juice, fermented milk, yogurt, or brewed vinegar. In the case of the alkali treatment, an alkali such as sodium hydroxide or potassium hydroxide can be added. In the case of the denaturant treatment, a denaturant such as guanidine hydrochloride, urea, arginine, or PEG may be added. In the case of the heating or cooling treatment, examples of the heating temperature include temperatures in the ranges including, as the upper limit and the lower limit, any temperatures of 60°C, 70°C, 80°C, 90°C, 100°C, 110°C, 120°C, 125°C, 130°C, 135°C, 140°C, 145°C, and 150°C, for example, a range of from 60°C to 150°C. Examples of the cooling temperature include temperatures in the ranges including, as the upper limit and the lower limit, any temperatures of -10°C, -15°C, -20°C, -25°C, -30°C, -35°C, -40°C, -45°C, -50°C, -55°C, - 60°C, -65°C, -70°C, and -75°C, for example, a range of from -10°C to -75°C. Examples of the heating or cooling time include times in the ranges including, as the upper limit and the lower limit, any times of 5 seconds, 10 seconds, 30 seconds, 1 minute, 5 minutes, 10 minutes, 20 minutes, 30 minutes, 40 minutes, 50 minutes, 60 minutes, 70 minutes, 80 minutes, 90 minutes, 100 minutes, 120 minutes, 150 minutes, 180 minutes, and 200 minutes, for example, a range of from 5 seconds to 200 minutes. In the case of the high-pressure treatment, examples of the conditions of the pressure include pressures in the ranges including, as the upper limit and the lower limit, any pressures of 100 MPa, 200 MPa, 300 MPa, 400 MPa, 500 MPa, 600 MPa, 700 MPa, 800 MPa, 900 MPa, and 1000 MPa, for example, a range of from 100 MPa to 1000 MPa. In the case of the organic solvent treatment, examples of the used solvent include alcohols and ketones, for example, ethanol and acetone. In the case of the mineral addition treatment, examples of the used mineral include ions of divalent metals such as calcium and magnesium. In the case of the supercritical treatment, the treatment can be performed, for example, using carbon dioxide in a supercritical state at a temperature of about 30°C or higher and a pressure of about 7 MPa or more. In the case of the ultrasonic treatment, the treatment can be performed, for example, by irradiation at a frequency of from 100 KHz to 2 MHz with an output of from 100 to 1000 W. In the case of the electrolysis treatment, for example, an aqueous protein solution may be treated by application of a voltage of from 100 mV to 1000 mV. In a specific embodiment, the treatment for decomposing and/or denaturing a protein is selected from the denaturant treatment, the heating treatment, and combinations thereof.

The conditions of the treatment for adjusting molecular weight distribution of a protein, for example, the type of filter medium, a carrier for gel filtration chromatography, and the number of revolutions, electric current, and time in centrifugation can be appropriately determined by those skilled in the art. Examples of the filter medium include filter paper, filter cloth, diatomaceous earth, ceramics, glass, and membranes. Examples of the carrier for gel filtration chromatography include polyacrylamide and agarose. Examples of the conditions of centrifugation include conditions of from 1000 to 3000 × g for 5 to 20 minutes.

### Dietary Fiber

The egg substitute of the present invention can further contain dietary fiber.

Examples of the dietary fiber of the present invention include bean curd refuse of legumes such as soybean, chitosan, cellulose, crystalline cellulose, hemicellulose, sodium carboxymethylcellulose, lignin, wheat bran, wheat germ, oat fiber, corn fiber, oatmeal, corn meal, sesame seed powder, and yeast cell wall. The dietary fiber is preferably oat fiber or sesame seed powder.

The content of the dietary fiber in the egg substitute is, relative to 100 mass*%* of a total amount of water, the protein material, the oil and/or fat, a total amount of the gelling agents (A) and (B), and the dietary fiber, from 0.1 to 10 mass*%*, preferably from 0.3 to 8 mass*%*, more preferably from 0.5 to 6 mass, and may be still more preferably from 0.5 to 5 mass*%*, from 0.5 to 4 mass*%*, from 0.5 to 3 mass*%*, or from 0.5 to 2 mass*%*.

When the egg substitute contains the dietary fiber, the egg substitute contains, relative to 100 mass*%* of a total amount of water, the protein material, the oil and/or fat, a total amount of the gelling agents (A) and (B), and the dietary fiber, from 0.01 to 5 mass*%* of the protein material, from 5 to 30 mass*%* of the oil and/or fat, and from 1 to 10 mass*%* of the gelling agents (A) and (B).

### Other Raw Materials

Various raw materials can be incorporated in the egg substitute of the present invention as necessary.

Examples thereof include sugars, sugar alcohols, starch, water-soluble polysaccharides such as water-soluble soybean polysaccharides and water-soluble pea polysaccharides, thickening polysaccharides, dextrin, emulsifiers, salts, flavors, sweeteners, colorants, preservatives, pH adjusters, stabilizers, seasonings, and spices.

### Method for Producing Egg Substitute

The egg substitute of the present invention is characterized in that it has steps (1) and (2) described below:
(1) mixing and emulsifying water, a protein material, and an oil and/or fat to prepare an oil-in-water emulsion having an oil and/or fat content of 40 mass*%* or more; and
(2) adding gelling agents (A) and (B) described below to the oil-in-water emulsion obtained in step (A) and mixing the gelling agents (A) and (B) with the oil-in-water emulsion to prepare a dough:
   (A) curdlan; and
   (B) one or more selected from methylcellulose, gellan gum, and konjac flour.

First, step (1) of preparing the oil-in-water emulsion is described.

Water, protein material, oil and/or fat, and other raw materials as necessary, such as a carbohydrate, an emulsifier, or a mineral are mixed, and the resulting solution is homogenized with a high-pressure homogenizer or the like to give an oil-in-water emulsion.

The oil-in-water emulsion has an oil and/or fat content of 40 mass*%* or more. The oil and/or fat content is preferably 50 mass*%* or more, more preferably 60 mass*%* or more, and may be still more preferably 70 mass*%* or more, 75 mass*%* or more, or 80 mass*%* or more. The upper limit of the oil and/or fat content is not particularly limited, and is, for example, 99 mass*%* or less, 95 mass*%* or less, or 90 mass*%* or less.

### Mixing and Homogenization

An aqueous phase portion can be prepared by producing an aqueous solution of the protein material. Other raw materials may be added to the aqueous solution as necessary, but need not be added. The concentration of the protein material in the aqueous solution is not particularly limited, and may be, for example, from 1 to 40 mass*%*, from 2 to 35 mass*%*, from 3 to 30 mass*%*, from 4 to 28 mass*%*, from 5 to 25 mass*%*, or from 6 to 22 mass*%*. The pH of the aqueous phase portion is not particularly limited and need not be adjusted, but may be adjusted by addition of an acid or an alkali. Examples of the pH of the aqueous phase portion include a pH of from 3 to 10, from 4 to 6.5, and from 7 to 9. The temperature for preparing the aqueous phase portion is not particularly limited, and may be, for example, room temperature. In a more specific embodiment, an aqueous phase portion containing a hydrophilic emulsifier, a carbohydrate, and/or the like whose solubility is improved by heating can be prepared, for example, by dissolving or dispersing the material at a temperature in the range of from 20 to 70°C, and preferably from 55 to 65°C. The raw materials added to the aqueous phase portion can be appropriately determined by those skilled in the art. For example, in the case where a salt, a water-soluble flavor, and/or the like is added, the material is added to the aqueous phase portion.

An oil phase portion may be prepared using only an oil and/or fat, or may be prepared by mixing an oil-soluble material with an oil and/or fat and dissolving or dispersing the oil-soluble material at a temperature in the range of, for example, from 50 to 80°C, and preferably from 55 to 70°C. Furthermore, the protein material may be dispersed in the oil phase portion. The raw materials added to the oil phase portion can be appropriately determined by those skilled in the art. For example, in the case where a lipophilic emulsifier, a lipophilic flavor, and/or the like is used, the material may be added to a part or all of the raw material oil and/or fat.

The resulting oil phase portion and the resulting aqueous phase portion are warmed, for example, to 40 to 80°C, and preferably to 55 to 70°C, mixed, and preliminarily emulsified. The preliminary emulsification can be performed using a rotary stirrer such as a homomixer. After the preliminary emulsification, the mixture is homogenized with a homogenizing device. Alternatively, all the raw materials may be mixed and homogenized with a homogenizing device without preliminary emulsification. In a more specific embodiment, preliminary emulsification and/or homogenization may be performed a plurality of times. In a still more specific embodiment, the following processes are possible: all or a part of the aqueous phase and a part of the oil phase are mixed and preliminarily emulsified, the remaining raw materials are added, and the resulting mixture is homogenized; a part of the aqueous phase and all or a part of the oil phase are mixed and preliminarily emulsified, the remaining raw materials are added, and the resulting mixture is homogenized; or these processes are repeated.

Examples of the homogenizing device include a homomixer; a homogenizer; a colloid mill; ultrasonic emulsification equipment; an agihomomixer with both functions of an agitator and a homomixer; a cutter blade mixer such as a silent cutter or a Stephan cooker; and a rotor stator type in-line mixer such as an extruder or an emulder. For example, in the case of homogenization with a homogenizer, the pressure can be set to 10 to 100 MPa, and preferably to 30 to 100 MPa.

Next, step (2) of preparing the dough is described.

The oil-in-water emulsion obtained in step (1) is mixed with gelling agents. As the gelling agents, (A) curdlan, and (B) one or more selected from methylcellulose, gellan gum, and konjac flour are used.

Aqueous solutions of the gelling agents are prepared, and the aqueous solutions are mixed with the oil-in-water emulsion to prepare a dough, thereby obtaining the egg substitute of the present invention.

The aqueous solution of the gelling agent (A) and the aqueous solution of the gelling agent (B) may be added separately to the oil-in-water emulsion, or the aqueous solutions of the gelling agents may be mixed in advance and then added to the oil-in-water emulsion.

The concentration of the aqueous solutions of the gelling agents is not particularly limited, and an appropriate concentration can be selected in consideration of the viscosity of the aqueous solutions and the like.

The mixing device is not limited, and examples thereof include a food processor, a juice mixer, a cutter blade mixer such as a silent cutter or a Stephan cooker, an extruder, and a kneader.

### Baked Egg Product and Baked Egg Product-Like Food

The term "baked egg product" as used in the present invention refers to a coagulated food obtained by baking an egg in a frying pan or the like, and examples thereof include scrambled egg, stir-fried egg, omelet skin, rice omelet skin, thin baked egg, rolled egg, and soup stock rolled egg. The baked egg product-like food has an appearance and a texture imitating the "baked egg product", and is obtained by substituting a part or the whole of an egg with another material. The stir-fried egg can be eaten as it is, and can also be used as an ingredient of fried rice.

The method for producing the baked egg product-like food of the present invention is described.

The egg substitute of the present invention is baked to produce a baked egg product-like food. Examples of the baking method include direct flame heating, steam heating, fry heating, hot air heating, infrared heating, and microwave heating. For example, in the case where the baked egg product-like food is produced by heating in a frying pan, the frying pan or the like is heated and greased as necessary, and the dough is poured into the frying pan and heated. When the dough begins to coagulate, the shape is adjusted by stirring or rolling the dough according to the form of the baked egg product-like food, whereby the baked egg product-like food can be obtained. Thereafter, the baked egg product-like food can be stored by refrigeration or freezing according to the form of distribution.

### Dried Product of Egg Substitute or Baked Egg Product-Like Food

The egg substitute or the baked egg product-like food of the present invention can be dried to give a dried product. As for the drying method, known methods such as heat drying, ventilation drying, freeze drying, and vacuum heat drying (with or without microwaves) can be used. In one embodiment, the moisture content of the dried product of the egg substitute or the dried product of the baked egg product-like food of the present invention is less than 10 mass*%*, for example, less than 5 mass*%*, from 1 to 9 mass*%*, from 2 to 8 mass*%*, from 3 to 7 mass*%*, or from 1 to 4 mass*%*. The dried product may be subjected to general food processing treatments such as molding and crushing as necessary.

The dried product of the egg substitute or the dried product of the baked egg product-like food obtained by such a method can be reconstituted with hot water, and exhibits a good texture and a good flavor after reconstitution with hot water.

### Examples

Hereinafter, the present invention is described by way of examples. Note that, in the examples, all parts and percentages are by mass unless otherwise specified.

### Preparation of Protein Materials

The following protein materials were obtained or prepared. The protein contents of these vegetable protein materials were all 80 mass*%* or more.

Vegetable protein material A-1: a product obtained by subjecting a soybean protein isolate to a decomposition/denaturation and molecular weight distribution adjustment treatment (a test product of FUJI OIL CO., LTD.; the raw material soybean protein isolate was Fujipro F (a commercially available product from FUJI OIL CO., LTD.); molecular weight distribution: 2000 or more and less than 20000 - 64*%*/20000 or more - 14*%*, NSI 98.1)

Vegetable protein material A-2: a product obtained by subjecting a soybean protein isolate to a decomposition/denaturation treatment (a test product of FUJI OIL CO., LTD.; the raw material soybean protein isolate was Fujipro F (a commercially available product from FUJI OIL CO., LTD.); molecular weight distribution: 2000 or more and less than 20000 - 38*%*/20000 or more - 55*%*, NSI 98.4)

Vegetable protein material A-3: a product obtained by subjecting a pea protein isolate to a denaturation and molecular weight distribution adjustment treatment (a test product of FUJI OIL CO., LTD.; the raw material pea protein isolate was Empro E 86HV (a commercially available product from Emsland Group); molecular weight distribution: 2000 or more and less than 20000 - 68*%*/20000 Da or more - 12*%*, NSI 100.1)

Vegetable protein material B: a soybean protein isolate (Fujipro F, a commercially available product from FUJI OIL CO., LTD.)

Vegetable protein material C: an enzyme-treated soybean protein isolate (Fujipro-CLE, a commercially available product from FUJI OIL CO., LTD.))

Vegetable protein material D: a pea protein isolate (Empro E 86HV, a commercially available product from Emsland Group)

### Examples 1 to 4 and Comparative Examples 1 to 3

According to the formulation specified in Table 1, a 20*%* aqueous solution of the vegetable protein material A-1 was used as an aqueous phase portion, and high-oleic sunflower oil (High-Ol 75B manufactured by FUJI OIL CO., LTD.) was used as an oil phase portion. The aqueous phase portion was added to a cutter blade mixer (Robot Coupe R-3D manufactured by FMI Corporation), and stirred for 10 seconds. Then, the oil phase portion was gradually added with stirring, and the materials were stirred for 2 minutes to prepare an oil-in-water emulsion 1 having an oil and/or fat content of 85*%*.

Next, curdlan (Curdlan preparation CD-ES manufactured by Mitsubishi Corporation Life Sciences Limited), methylcellulose (METOLOSE MCE-4000 manufactured by Shin-Etsu Chemical Co., Ltd.), gellan gum (KELCOGEL HM manufactured by DSP Gokyo Food & Chemical Co., Ltd., native gellan gum), and konjac flour (Inagel (ULTRAMAN Nan G5) manufactured by Ina Food Industry Co., Ltd.) were provided as gelling agents, and dissolved in water to give a 15*%* aqueous curdlan solution, a 2*%* aqueous methylcellulose solution, a 2*%* aqueous gellan gum solution, and a 4*%* aqueous konjac flour solution.

According to the formulation specified in Table 2, the aqueous solutions of the gelling agents were added to the oil-in-water emulsion and mixed with a cutter blade mixer (Robot Coupe R-3D manufactured by FMI Corporation) to prepare a dough, thereby obtaining an egg substitute.

### Preparation of Stir-Fried Egg-Like Foods

In a frying pan, 100 g of each egg substitute was placed, and heated while being stirred until the weight became 80 g using an IH heater (KZPH38 manufactured by Panasonic Corporation) at medium heat No. 5 to give a stir-fried egg-like food.

The obtained stir-fried egg-like food was subjected to sensory evaluation according to a scoring method by 8 panelists using, as evaluation items, the flavor and texture after heating. Scores were given on the following 5 scales, and the average of the scores of all the panelists was calculated.

### Flavor

Score 5: No off-taste or off-odor was felt, and the flavor was very good.

Score 4: Almost no off-taste or off-odor was felt, and the flavor was good.

Score 3: Slight off-taste or off-odor was felt with acceptable level, and the flavor was moderately good.

Score 2: Strong off-taste or off-odor was felt, and the flavor was poor.

Score 1: Very strong off-taste or off-odor was felt, and the flavor was very poor.

### Appearance and texture

Score 5: The stir-fried egg-like food was crumbly, elastic, and had a very good texture of stir-fried egg.

Score 4: The stir-fried egg-like food was crumbly, moderately elastic, and had a good texture of stir-fried egg.

Score 3: The stir-fried egg-like food was moderately crumbly, moderately elastic, and had a moderately good texture of stir-fried egg.

Score 2: The stir-fried egg-like food was moderately less crumbly, moderately less elastic, and had a moderately poor texture of stir-fried egg.

Score 1: The stir-fried egg-like food was less crumbly, less elastic, and had a poor texture of stir-fried egg.

The average of the scores of the panelists was evaluated on the following 5 scales of A to E. A stir-fried egg-like food with an evaluation of A to C for both the flavor and texture was determined to be pass.
A: Score 4.5 or more
B: Score 3.5 or more and less than 4.5
C: Score 3.0 or more and less than 3.5
D: Score 2.0 or more and less than 3.0
E: Score less than 2.0

**Table 1: Formulation of Oil-in-Water Emulsion 1 (%)**

| | | Oil-in-water emulsion 1 |
|---|---|---|
| Aqueous phase portion | 20*%* Aqueous solution of vegetable protein material A-1 | 15 |
| Oil phase portion | High-oleic sunflower oil | 85 |
| Total | | 100 |

**Table 2: Formulation of Egg Substitutes**

| Raw material (*%*) | Comparative Example 1 | Comparative Example 2 | Comparative Example 3 | Example 1 | Example 2 | Example 3 | Example 4 |
|---|---|---|---|---|---|---|---|
| Oil-in-water emulsion 1 | 15.0 | 15.0 | 15.0 | 15.0 | 15.0 | 15.0 | 15.0 |
| 15*%* Curdlan | 26.6 | - | - | 26.6 | 26.6 | 26.6 | 26.6 |
| 2*%* Methylcellulose | - | 30.0 | - | 30.0 | - | - | 30.0 |
| 2*%* Gellan gum | - | - | 6.0 | - | 6.0 | - | 6.0 |
| 4*%* Konjac flour | - | - | - | - | - | 36.0 | - |
| 30*%* Phosphoric acid | 1.2 | 1.2 | 1.2 | 1.2 | 1.2 | 1.2 | 1.2 |
| Addition of water | 57.2 | 53.8 | 77.8 | 27.2 | 51.2 | 21.2 | 21.2 |
| Total | 100 | 100 | 100 | 100 | 100 | 100 | 100 |

**Table 3: Evaluation Results**

| | Comparativ e Example 1 | Comparativ e Example 2 | Comparativ e Example 3 | Example 1 | Example 2 | Example 3 | Example 4 |
|---|---|---|---|---|---|---|---|
| Oil and/or fat content in egg substitute (*%*) | 12.75 | 12.75 | 12.75 | 12.75 | 12.75 | 12.75 | 12.75 |
| Content of protein material in egg substitute (*%*) | 0.45 | 0.45 | 0.45 | 0.45 | 0.45 | 0.45 | 0.45 |
| Content of gelling agent in egg substitute (*%*) | 3.99 | 0.6 | 0.12 | 4.59 | 4.11 | 5.43 | 4.71 |
| Flavor | D | D | D | B | B | B | A |
| Appearance and texture | E | E | E | C | C | B | A |

The evaluation results are shown in Table 3. The stir-fried egg-like foods prepared from the egg substitutes of Comparative Examples 1 to 3 containing only one kind of gelling agent had a poor flavor and a poor texture. On the other hand, the stir-fried egg-like foods prepared from the egg substitutes of Examples 1 to 4 containing curdlan and methylcellulose, curdlan and konjac flour, curdlan and gellan gum, or a combination of curdlan, methylcellulose, and gellan gum had a good flavor and a good texture. Among them, Example 4 containing a combination of curdlan, methylcellulose, and gellan gum gave the best result.

### Examples 5 to 10: Study of Kind of Proteins

According to the formulation specified in Table 4, a 10*%* aqueous solution of each protein material was used as an aqueous phase portion, and high-oleic sunflower oil (High-Ol 75B manufactured by FUJI OIL CO., LTD.) was used as an oil phase portion. The aqueous phase portion was added to a cutter blade mixer (Robot Coupe R-3D manufactured by FMI Corporation), and stirred for 10 seconds. Then, the oil phase portion was gradually added with stirring, and the materials were stirred for 2 minutes to prepare oil-in-water emulsions 2 to 7 each having an oil and/or fat content of 80*%*.

Next, curdlan (Curdlan preparation CD-ES manufactured by Mitsubishi Corporation Life Sciences Limited), methylcellulose (METOLOSE MCE-4000 manufactured by Shin-Etsu Chemical Co., Ltd.), and gellan gum (KELCOGEL HM manufactured by DSP Gokyo Food & Chemical Co., Ltd.) were provided as gelling agents, and dissolved in water to give a 15*%* aqueous curdlan solution, a 2*%* aqueous methylcellulose solution, and a 2*%* aqueous gellan gum solution.

According to the formulation specified in Table 5, the aqueous solutions of the gelling agents and other raw materials were added to the oil-in-water emulsion and mixed with a cutter blade mixer (Robot Coupe R-3D manufactured by FMI Corporation) to prepare a dough, thereby obtaining an egg substitute.

Oat fiber (VITACEL HF200 manufactured by Rettenmaier Japan Co., Ltd.) was used as the dietary fiber. In addition, dextrin (TK-16 manufactured by Matsutani Chemical Industry Co., Ltd.) was used.

The egg substitutes were evaluated in the same manner as in Example 1, and the results are shown in Table 6.

**Table 4: Formulation of Oil-in-Water Emulsions 2 to 7 (%)**

| | Oil-in-water emulsion 2 | Oil-in-water emulsion 3 | Oil-in-water emulsion 4 | Oil-in-water emulsion 5 | Oil-in-water emulsion 6 | Oil-in-water emulsion 7 |
|---|---|---|---|---|---|---|
| 10*%* Aqueous solution of vegetable protein material A-1 | 20 | - | - | - | - | - |
| 10*%* Aqueous solution of vegetable protein material A-2 | - | 20 | - | - | - | - |
| 10*%* Aqueous solution of vegetable protein material A-3 | - | - | 20 | - | - | - |
| 10*%* Aqueous solution of vegetable protein material B | - | - | - | 20 | - | - |
| 10*%* Aqueous solution of vegetable protein material C | - | - | - | - | 20 | - |
| 10*%* Aqueous solution of vegetable protein material D | - | - | - | - | - | 20 |
| High-oleic sunflower oil | 80 | 80 | 80 | 80 | 80 | 80 |
| Total | 100 | 100 | 100 | 100 | 100 | 100 |

**Table 5: Formulation of Egg Substitutes**

| Raw material (*%*) | Example 5 | Example 6 | Example 7 | Example 8 | Example 9 | Example 10 |
|---|---|---|---|---|---|---|
| Oil-in-water emulsion 2 | 15.0 | - | - | - | - | - |
| Oil-in-water emulsion 3 | - | 15.0 | - | - | - | - |
| Oil-in-water emulsion 4 | - | - | 15.0 | - | - | - |
| Oil-in-water emulsion 5 | - | - | - | 15.0 | - | - |
| Oil-in-water emulsion 6 | - | - | - | - | 15.0 | - |
| Oil-in-water emulsion 7 | - | - | - | - | - | 15.0 |
| 15*%* Curdlan | 26.6 | 26.6 | 26.6 | 26.6 | 26.6 | 26.6 |
| 2*%* Methylcellulose | 30.0 | 30.0 | 30.0 | 30.0 | 30.0 | 30.0 |
| 2*%* Gellan gum | 6.0 | 6.0 | 6.0 | 6.0 | 6.0 | 6.0 |
| Sodium glutamate | 0.3 | 0.3 | 0.3 | 0.3 | 0.3 | 0.3 |
| Common salt | 0.8 | 0.8 | 0.8 | 0.8 | 0.8 | 0.8 |
| Yellow pigment | 0.15 | 0.15 | 0.15 | 0.15 | 0.15 | 0.15 |
| Red pigment | 0.05 | 0.05 | 0.05 | 0.05 | 0.05 | 0.05 |
| 30*%* Phosphoric acid | 1.2 | 1.2 | 1.2 | 1.2 | 1.2 | 1.2 |
| Oat fiber | 1.0 | 1.0 | 1.0 | 1.0 | 1.0 | 1.0 |
| Dextrin | 4.3 | 4.3 | 4.3 | 4.3 | 4.3 | 4.3 |
| Addition of water | 14.6 | 14.6 | 14.6 | 14.6 | 14.6 | 14.6 |
| Total | 100 | 100 | 100 | 100 | 100 | 100 |

**Table 6: Evaluation Results**

| | Example 5 | Example 6 | Example 7 | Example 8 | Example 9 | Example 10 |
|---|---|---|---|---|---|---|
| Oil and/or fat content in egg substitute (*%*) | 12.00 | 12.00 | 12.00 | 12.00 | 12.00 | 12.00 |
| Content of protein material in egg substitute (*%*) | 0.30 | 0.30 | 0.30 | 0.30 | 0.30 | 0.30 |
| Content of total amount of gelling agents in egg substitute (*%*) | 4.71 | 4.71 | 4.71 | 4.71 | 4.71 | 4.71 |
| Flavor | A | A | A | C | B | C |
| Appearance and texture | A | A | A | B | B | C |

The stir-fried egg-like foods prepared from the egg substitutes of Examples 5 to 10 had a good flavor and a good texture.

### Examples 11 to 16: Study of Oil and/or Fat Content in Oil-in-Water Emulsions

According to the formulation specified in Table 7, a 20*%* aqueous solution of a protein material A-1 was used as an aqueous phase portion, and high-oleic sunflower oil (High-Ol 75B manufactured by FUJI OIL CO., LTD.) was used as an oil phase portion. The aqueous phase portion was added to a cutter blade mixer (Robot Coupe R-3D manufactured by FMI Corporation), and stirred for 10 seconds. Then, the oil phase portion was gradually added with stirring, and the materials were stirred for 2 minutes to prepare oil-in-water emulsions (oil-in-water emulsion 1 and oil-in-water emulsions 8 to 12) each having an oil and/or fat content of 50 to 85*%*.

Next, aqueous solutions of gelling agents were prepared in the same manner as in Example 5.

According to the formulation specified in Table 8, the aqueous solutions of the gelling agents and other raw materials were added to the oil-in-water emulsion (each of the oil-in-water emulsion 1 and the oil-in-water emulsions 8 to 12) and mixed with a cutter blade mixer (Robot Coupe R-3D manufactured by FMI Corporation) to prepare a dough, thereby obtaining an egg substitute. Curdlan (Curdlan preparation CD-ES manufactured by Mitsubishi Corporation Life Sciences Limited), methylcellulose (METOLOSE MCE-4000 manufactured by Shin-Etsu Chemical Co., Ltd.), and gellan gum (KELCOGEL HM manufactured by DSP Gokyo Food & Chemical Co., Ltd.) were used as gelling agents. Oat fiber (VITACEL HF200 manufactured by Rettenmaier Japan Co., Ltd.) and dextrin (TK-16 manufactured by Matsutani Chemical Industry Co., Ltd.) were used.

The egg substitutes were evaluated in the same manner as in Example 1, and the evaluation results are shown in Table 9.

**Table 7: Formulation of Oil-in-Water Emulsions 8 to 12 (%)**

| | Oil-in-water emulsion 8 | Oil-in-water emulsion 9 | Oil-in-water emulsion 10 | Oil-in-water emulsion 11 | Oil-in-water emulsion 12 |
|---|---|---|---|---|---|
| 20*%* Aqueous solution of protein material A-1 | 20 | 25 | 30 | 40 | 50 |
| High-oleic sunflower oil | 80 | 75 | 70 | 60 | 50 |
| Total | 100 | 100 | 100 | 100 | 100 |

**Table 8: Formulation of Egg Substitutes**

| Raw material (*%*) | Example 11 | Example 12 | Example 13 | Example 14 | Example 15 | Example 16 |
|---|---|---|---|---|---|---|
| Oil-in-water emulsion 1 | 15.0 | - | - | - | - | - |
| Oil-in-water emulsion 8 | - | 15.94 | - | - | - | - |
| Oil-in-water emulsion 9 | - | - | 17.0 | - | - | - |
| Oil-in-water emulsion 10 | - | - | - | 18.21 | - | - |
| Oil-in-water emulsion 11 | - | - | - | - | 21.25 | - |
| Oil-in-water emulsion 12 | - | - | - | - | - | 25.5 |
| 15*%* Curdlan | 26.6 | 26.6 | 26.6 | 26.6 | 26.6 | 26.6 |
| 2*%* Methylcellulose | 30.0 | 30.0 | 30.0 | 30.0 | 30.0 | 30.0 |
| 2*%* Gellan gum | 6.0 | 6.0 | 6.0 | 6.0 | 6.0 | 6.0 |
| Sodium glutamate | 0.3 | 0.3 | 0.3 | 0.3 | 0.3 | 0.3 |
| Common salt | 0.8 | 0.8 | 0.8 | 0.8 | 0.8 | 0.8 |
| Yellow pigment | 0.15 | 0.15 | 0.15 | 0.15 | 0.15 | 0.15 |
| Red pigment | 0.05 | 0.05 | 0.05 | 0.05 | 0.05 | 0.05 |
| 30*%* Phosphoric acid | 1.2 | 1.2 | 1.2 | 1.2 | 1.2 | 1.2 |
| Oat fiber | 1.0 | 1.0 | 1.0 | 1.0 | 1.0 | 1.0 |
| Dextrin | 4.3 | 4.3 | 4.3 | 4.3 | 4.3 | 4.3 |
| Addition of water | 14.6 | 13.66 | 12.6 | 11.39 | 8.35 | 4.1 |
| Total | 100 | 100 | 100 | 100 | 100 | 100 |

**Table 9: Evaluation Results**

| | Example 11 | Example 12 | Example 13 | Example 14 | Example 15 | Example 16 |
|---|---|---|---|---|---|---|
| Oil and/or fat content in egg substitute (*%*) | 12.75 | 12.75 | 12.75 | 12.75 | 12.75 | 12.75 |
| Content of protein material in egg substitute (*%*) | 0.45 | 0.64 | 0.85 | 1.09 | 1.70 | 2.55 |
| Content of total amount of gelling agents in egg substitute (*%*) | 4.71 | 4.71 | 4.71 | 4.71 | 4.71 | 4.71 |
| Flavor | A | A | A | A | B | B |
| Appearance and texture | A | A | B | B | C | C |

The stir-fried egg-like foods prepared from the egg substitutes of Examples 11 to 16 each containing an oil-in-water emulsion having an oil and/or fat content of from 50 to 85*%* had a good flavor and a good texture. In particular, when the egg substitutes were prepared using the oil-in-water emulsions having an oil and/or fat content of 80*%* or more in Examples 11 and 12, the texture was very good.

### Examples 17 to 24: Study of Protein Concentration in Preparation of Oil-in-Water Emulsions

According to the formulation specified in Table 10, a 5 to 20*%* aqueous solution of the protein material A-1 was used as an aqueous phase portion, and high-oleic sunflower oil (High-Ol 75B manufactured by FUJI OIL CO., LTD.) was used as an oil phase portion. The aqueous phase portion was added to a cutter blade mixer (Robot Coupe R-3D manufactured by FMI Corporation), and stirred for 10 seconds. Then, the oil phase portion was gradually added with stirring, and the materials were stirred for 2 minutes to prepare oil-in-water emulsions 13 to 17 each having an oil and/or fat content of 80 to 85*%*. As oil-in-water emulsions containing 15*%* or 20*%* of the 20*%* aqueous solution of the protein material A-1, the oil-in-water emulsion 1 (containing 15*%* of the 20*%* aqueous solution) and the oil-in-water emulsion 8 (containing 20*%* of the 20*%* aqueous solution) were used, respectively, and as an oil-in-water emulsion containing 20*%* of the 10*%* aqueous solution of the protein material A-1, the oil-in-water emulsion 2 was used.

Next, aqueous solutions of gelling agents were prepared in the same manner as in Example 5.

According to the formulation specified in Table 11, the aqueous solutions of the gelling agents and other raw materials were added to the oil-in-water emulsion (each of the oil-in-water emulsions 1, 2, and 8 and the oil-in-water emulsions 13 to 17) and mixed with a cutter blade mixer (Robot Coupe R-3D manufactured by FMI Corporation) to prepare a dough, thereby obtaining an egg substitute. Curdlan (Curdlan preparation CD-ES manufactured by Mitsubishi Corporation Life Sciences Limited), methylcellulose (METOLOSE MCE-4000 manufactured by Shin-Etsu Chemical Co., Ltd.), and gellan gum (KELCOGEL HM manufactured by DSP Gokyo Food & Chemical Co., Ltd.) were used as gelling agents. Oat fiber (VITACEL HF200 manufactured by Rettenmaier Japan Co., Ltd.) was used as the dietary fiber. In addition, dextrin (TK-16 manufactured by Matsutani Chemical Industry Co., Ltd.) was used.

The egg substitutes were evaluated in the same manner as in Example 1, and the evaluation results are shown in Table 12.

**Table 10: Formulation of Oil-in-Water Emulsions 13 to 17 (%)**

| | Oil-in-water emulsion 13 | Oil-in-water emulsion 14 | Oil-in-water emulsion 15 | Oil-in-water emulsion 16 | Oil-in-water emulsion 17 |
|---|---|---|---|---|---|
| 15*%* Aqueous solution of vegetable protein material A-1 | 15 | - | - | 20 | - |
| 10*%* Aqueous solution of vegetable protein material A-1 | - | 15 | - | - | - |
| 5*%* Aqueous solution of vegetable protein material A-1 | - | - | 15 | - | 20 |
| High-oleic sunflower oil | 85 | 85 | 85 | 80 | 80 |
| Total | 100 | 100 | 100 | 100 | 100 |

**Table 11: Formulation of Egg Substitutes**

| Raw material (*%*) | Example 17 | Example 18 | Example 19 | Example 20 | Example 21 | Example 22 | Example 23 | Example 24 |
|---|---|---|---|---|---|---|---|---|
| Oil-in-water emulsion 1 | 15.0 | - | - | - | - | - | - | - |
| Oil-in-water emulsion 13 | - | 15.0 | - | - | - | - | - | - |
| Oil-in-water emulsion 14 | - | - | 15.0 | - | - | - | - | - |
| Oil-in-water emulsion 15 | - | - | - | 15.0 | - | - | - | - |
| Oil-in-water emulsion 8 | - | - | - | - | 15.0 | - | - | - |
| Oil-in-water emulsion 16 | - | - | - | - | - | 15.0 | - | - |
| Oil-in-water emulsion 2 | - | - | - | - | - | - | 15.0 | - |
| Oil-in-water emulsion 17 | - | - | - | - | - | - | - | 15.0 |
| 15*%* Curdlan | 26.6 | 26.6 | 26.6 | 26.6 | 26.6 | 26.6 | 26.6 | 26.6 |
| 2*%* Methylcellulose | 30.0 | 30.0 | 30.0 | 30.0 | 30.0 | 30.0 | 30.0 | 30.0 |
| 2*%* Gellan gum | 6.0 | 6.0 | 6.0 | 6.0 | 6.0 | 6.0 | 6.0 | 6.0 |
| Sodium glutamate | 0.3 | 0.3 | 0.3 | 0.3 | 0.3 | 0.3 | 0.3 | 0.3 |
| Common salt | 0.8 | 0.8 | 0.8 | 0.8 | 0.8 | 0.8 | 0.8 | 0.8 |
| Yellow pigment | 0.15 | 0.15 | 0.15 | 0.15 | 0.15 | 0.15 | 0.15 | 0.15 |
| Red pigment | 0.05 | 0.05 | 0.05 | 0.05 | 0.05 | 0.05 | 0.05 | 0.05 |
| 30*%* Phosphoric acid | 1.2 | 1.2 | 1.2 | 1.2 | 1.2 | 1.2 | 1.2 | 1.2 |
| Oat fiber | 1.0 | 1.0 | 1.0 | 1.0 | 1.0 | 1.0 | 1.0 | 1.0 |
| Dextrin | 4.3 | 4.3 | 4.3 | 4.3 | 4.3 | 4.3 | 4.3 | 4.3 |
| Addition of water | 14.6 | 14.6 | 14.6 | 14.6 | 14.6 | 14.6 | 14.6 | 14.6 |
| Tota | 100 | 100 | 100 | 100 | 100 | 100 | 100 | 100 |

**Table 12: Evaluation Results**

| | Example 17 | Example 18 | Example 19 | Example 20 | Example 21 | Example 22 | Example 23 | Example 24 |
|---|---|---|---|---|---|---|---|---|
| Oil and/or fat content in egg substitute (*%*) | 12.75 | 12.75 | 12.75 | 12.75 | 12.00 | 12.00 | 12.00 | 12.00 |
| Content of protein material in egg substitute (*%*) | 0.45 | 0.34 | 0.23 | 0.11 | 0.60 | 0.45 | 0.30 | 0.15 |
| Content of total amount of gelling agents in egg substitute (*%*) | 4.71 | 4.71 | 4.71 | 4.71 | 4.71 | 4.71 | 4.71 | 4.71 |
| Flavor | A | A | A | A | A | A | A | A |
| Appearance and texture | A | A | A | B | A | B | C | C |

The stir-fried egg-like foods prepared from the egg substitutes of Examples 17 to 24 had a good flavor and a good texture. In particular, Examples 17 to 19 each prepared using an aqueous solution having a protein concentration of 10 to 20*%* and using an oil-in-water emulsion having an oil and/or fat content of 85*%*, and Example 21 prepared using an aqueous solution having a protein concentration of 20*%* and using an oil-in-water emulsion having an oil and/or fat content of 80*%* gave very good results.

### Example 25: Preparation of Rolled Egg-Like Food

To 100 g of the egg substitute of Example 17, 25 g of water was added, and the materials were mixed well to give a dough for a rolled egg-like food.

To the whole surface of a rolled egg frying pan, 0.1 to 2 g of an edible oil and/or fat was thinly applied, and 40 g of the dough for a rolled egg-like food was put in the frying pan, spread over the whole surface of the frying pan with a rubber spatula, and heated at medium heat No. 4 using an IH heater (KZPH38 manufactured by Panasonic Corporation). When the dough changed from a semi-solid state to a solid sheet state, the sheet was wound up, and this operation was repeated to give a rolled egg-like food. The rolled egg-like food had a good texture and a good flavor.

### Example 26: Preparation of Thin Baked Egg-Like Food

To 100 g of the egg substitute of Example 17, 38 g of water was added, and the materials were mixed well to give a dough for a thin baked egg-like food.

To the whole surface of a frying pan, 0.1 to 2 g of an edible oil and/or fat was thinly applied, and 50 g of the dough for a thin baked egg-like food was put in the frying pan, spread over the whole surface of the frying pan with a rubber spatula, and heated at medium heat No. 4 using an IH heater (KZPH38 manufactured by Panasonic Corporation). When the dough changed from a semi-solid state to a solid sheet state, the sheet was turned over for sufficient browning to give a thin baked egg-like food. The thin baked egg-like food had a good texture and a good flavor.

### Example 27: Preparation of Dried Product of Baked Egg Product-Like Food

According to the formulation specified in Table 13, a dough was prepared in the same manner as in Example 17 to give an egg substitute. In a frying pan, 100 g of the egg substitute was placed, and heated while being stirred until the weight became 80 g using an IH heater (KZPH38 manufactured by Panasonic Corporation) at medium heat No. 5 to give a stir-fried egg-like food. The stir-fried egg-like food was frozen in a freezer at -25°C for 72 hours, and then freeze-dried in a freeze dryer (FD10BM manufactured by NIHON TECHNO SERVICE CO., LTD.) for 72 hours to give a dried product of the stir-fried egg-like food.

It was confirmed that the dried product of the stir-fried egg-like food reconstituted with hot water at 90°C for 3 minutes had an appearance and a texture similar to those of an egg added as an ingredient to soup, and that the dried product had good reconstitution properties.

**Table 13: Formulation of Baked Egg Product-Like Food (for Drying) (%)**

| | Example 27 |
|---|---|
| Oil-in-water emulsion 1 | 15.0 |
| 15*%* Curdlan | 13.3 |
| 2*%* Methylcellulose | 43.9 |
| 2*%* Gellan gum | 6.0 |
| Sodium glutamate | 0.2 |
| Common salt | 0.4 |
| Yellow pigment | 0.15 |
| Red pigment | 0.05 |
| 30*%* Phosphoric acid | 1.2 |
| Oat fiber | 1.0 |
| Dextrin | 5.3 |
| Addition of water | 13.5 |
| Total | 100 |

## Claims

1. An egg substitute comprising:
water;
a protein material;
an oil and/or fat; and
gelling agents (A) and (B) described below,
the egg substitute contains, relative to 100 mass*%* of a total amount of the protein material, the oil and/or fat, the gelling agents, and water in the egg substitute, from 0.01 to 10 mass*%* of the protein material, from 5 to 30 mass*%* of the oil and/or fat, and from 1 to 10 mass*%* of a total amount of the gelling agents (A) and (B):
(A) curdlan; and
(B) one or more selected from methylcellulose, gellan gum, and konjac flour.

2. The egg substitute according to claim 1, further comprising dietary fiber,
the egg substitute contains, relative to 100 mass*%* of a total amount of water, the protein material, the oil and/or fat, the gelling agents, and the dietary fiber in the egg substitute, from 0.01 to 5 mass*%* of the protein material, from 5 to 30 mass*%* of the oil and/or fat, from 1 to 10 mass*%* of a total amount of the gelling agents (A) and (B), and from 0.1 to 10 mass*%* of the dietary fiber.

3. The egg substitute according to claim 1 or 2, wherein the protein material is a vegetable protein material.

4. A baked egg product-like food, which is a baked product of the egg substitute described in claim 1.

5. A baked egg product-like food, which is a baked product of the egg substitute described in claim 2.

6. A baked egg product-like food, which is a baked product of the egg substitute described in claim 3.

7. A dried product of the egg substitute described in claim 1.

8. A dried product of the egg substitute described in claim 2.

9. A dried product of the egg substitute described in claim 3.

10. A method for producing an egg substitute, the method comprising steps (1) and (2) described below:
(1) mixing and emulsifying water, a protein material, and an oil and/or fat to prepare an oil-in-water emulsion having an oil and/or fat content of 40 mass*%* or more; and
(2) adding gelling agents (A) and (B) described below to the oil-in-water emulsion obtained in step (1) and mixing the gelling agents (A) and (B) with the oil-in-water emulsion to prepare a dough:
(A) curdlan; and
(B) one or more selected from methylcellulose, gellan gum, and konjac flour.

11. The method for producing an egg substitute according to claim 10, wherein in step (1), water, the protein material, and the oil and/or fat are mixed and emulsified to prepare the oil-in-water emulsion having an oil and/or fat content of 50 mass*%* or more.

12. A method for producing a dried product of an egg substitute, the method comprising steps (1) to (3) described below:
(1) mixing and emulsifying water, a protein material, and an oil and/or fat to prepare an oil-in-water emulsion having an oil and/or fat content of 40 mass*%* or more;
(2) adding gelling agents (A) and (B) described below to the oil-in-water emulsion obtained in step (1) and mixing the gelling agents (A) and (B) with the oil-in-water emulsion to prepare a dough:
(A) curdlan; and
(B) one or more selected from methylcellulose, gellan gum, and konjac flour; and
(3) drying the dough obtained in step (2).

13. The method for producing a dried product of an egg substitute according to claim 12, wherein in step (1), water, the protein material, and the oil and/or fat are mixed and emulsified to prepare the oil-in-water emulsion having an oil and/or fat content of 50 mass*%* or more.

14. A method for producing a baked egg product-like food, the method comprising baking the egg substitute obtained by the production method described in claim 10.

15. A method for producing a baked egg product-like food, the method comprising baking the egg substitute obtained by the production method described in claim 11.

16. A method for producing a dried product of a baked egg product-like food, the method comprising drying the baked egg product-like food obtained by the production method described in claim 14.

17. A method for producing a dried product of a baked egg product-like food, the method comprising drying the baked egg product-like food obtained by the production method described in claim 15.
